# EUROPEAN PATENT APPLICATION

(11) **EP 0 781 901 A1**
(43) Date of publication of application: **02.07.1997**
(21) Application number: 96120940.0
(22) Date of filing: 27.12.1996
(51) Int. Cl.: F01M 1/08, F16J 1/08, F16J 1/16

(54) **Lubrication arrangement for engines**

(30) Priority: 29.12.1995 JP 352986/95
(71) Applicant: YAMAHA HATSUDOKI KABUSHIKI KAISHA, Iwata-shi Shizuoka-ken, 438 (JP)
(72) Inventor: Yoshida, Takeo, Iwata-shi, Shizuoka-ken, 438 (JP); Suzuki, Takahiro, Iwata-shi, Shizuoka-ken, 438 (JP)
(74) Representative: Grünecker, Kinkeldey, Stockmair & Schwanhäusser Anwaltssozietät

(57) **Abstract**

A lubrication arrangement for an internal combustion engine (1), said engine (1) comprising a crankcase (2) defining a crankchamber (3) and supporting a crankshaft (5), a cylinder (13) mounted on the crankcase (2), a piston (16) slidingly and reciprocatably received in a cylinder bore (14) of said cylinder (13), a connecting rod (26) for connecting said piston (16) with said crankshaft (5), said connecting rod (26) having a large end (27) connected to said crankshaft (5) via a crank pin (11) and a small end (29) connected to said piston (16) via a piston pin(24), and at least one cylinder side oil passage (38) of said lubrication arrangement having a first opening to said cylinder bore (14) wherein the other end is connected to an oil supply means (40) for supplying pressurized lubricating oil (39) to said cylinder side oil passage (38), said piston (16) and/or said piston pin (24) being provided with a second opening (62) whereby upon reciprocating movement of said piston (16) said first and second openings (59-62) coincide with each other at a certain position of said piston (16).

## Description

This invention relates to a lubrication arrangement for an internal combustion engine, said engine comprising a crankcase defining a crankchamber and supporting a crankshaft, a cylinder mounted on the crankcase, a piston slidingly and reciprocatably received in a cylinder bore of said cylinder, a connecting rod for connecting said piston with said crankshaft, said connecting rod having a large end connected to said crankshaft via a crank pin and a small end connected to said piston via a piston pin, and at least one cylinder side oil passage of said lubrication arrangement having a first opening to said cylinder bore wherein the other end is connected to an oil supply means for supplying pressurized lubricating oil to said cylinder side oil passage, as well as to a method for lubricating an internal combustion engine, said engine comprising a crankcase defining a crankchamber and supporting a crankshaft, a cylinder mounted on the crankcase, a piston slidingly and reciprocatably received in a cylinder bore of said cylinder, a connecting rod for connecting said piston with said crankshaft, said connecting rod having a large end connected to said crankshaft via a crank pin and a small end connected to said piston via a piston pin, and at least one cylinder side oil passage of a lubricating arrangement having a first opening to said cylinder bore wherein the other end is connected to an oil supply means for supplying pressurized lubricating oil to said cylinder side oil passage.

An engine usually has a crankcase supporting a crankshaft, a cylinder mounted on the crankcase, a piston inserted in a cylinder bore of the cylinder for sliding movement in the axial direction, a piston pin fitted to the piston, a connecting rod having a large end connected to said crankshaft and a small end to said piston pin, and an intake air passage for providing communication between the outside and the inside of said crankcase.

### [0003]

When the engine is operated, fresh air outside the engine is adapted to be inducted through said intake air passage into the crankcase, where it is compressed preliminarily, and then supplied to the combustion chamber in the cylinder bore.

In the engine construction described above, the following type of lubrication structure has been utilized.

A cylinder side oil passage having at one end an opening to said cylinder bore is provided on the cylinder side, and oil supply means for supplying pressurized lubricating oil is provided in the cylinder side oil passage.

Lubricating oil supplied from said oil supply means lubricates the sliding portion between the piston and the cylinder bore through said cylinder side oil passage, and then flows out to the cylinder bore on the crankcase side. On the other hand, lubricating oil is supplied to the large end of said connecting rod through a crankshaft side oil passage formed inside the crankshaft, and lubricates the large end. Thereafter, the lubricating oil is splashed inside said cylinder bore, and the splashed lubricating oil will lubricates the connecting portion between the piston pin and a small end of the connecting rod.

Or alternatively, when lubricating oil is supplied to the combustion chamber after being delivered to said intake air passage and taken into the crankcase together with fresh air, the lubricating oil is splashed inside the cylinder bore so as to lubricate the sliding portion of the piston, and said large and small ends are also lubricated by a part of said lubricating oil.

Since the lubrication of the connecting portion between the piston pin and the small end of the connecting rod is performed by splashing the lubricating oil inside the cylinder bore, only a small amount of the splashed lubricating oil contributes to the lubrication. As a result, a large amount of lubricating oil is consumed to ensure appropriate lubrication for the conventional lubrication systems.

However, when such an amount of luburicating oil is supplied, more lubricating oil will be taken into the combustion chamber for that, together with fresh air compressed preliminarily inside the crankcase. Therefore, most of the lubricating oil taken into the combustion chamber is burnt in the combustion stroke, the exhaust gas is discharged in the form of a large amount of white smoke through the exhaust pipe, and the residual unburnt lubricating oil is also discharged to the outside through the exhaust pipe, thus raising the problem of waste of the lubricating oil.

Accordingly, it is an objective of the present invention to provide a lubrication arrangement for an internal combustion engine as indicated above which facilitates the reduction of the consumption of lubrication oil.

According to the present invention this objective is solved for a lubrication arrangement as indicated above in that said piston and/or said piston pin being provided with a second opening whereby upon reciprocating movement of said piston said first and second openings coincide with each other at a certain position of said piston.

It is a further objective of the present invention to provide a method for lubricating an internal combustion engine as indicated above which enhances the reduction of lubricating oil consumption.

According to the present invention this further objective is solved for a method as indicated in that said piston pin is directly lubricated via said first opening when said piston pin passes said first opening.

According to the present invention there is no need to lubricate the piston pin by splashing oil from the crank pin side to the piston pin side, so that this piston pin in not any longer supplied with a surplus of lubricating oil.

Advantageous embodiments of the present invention are laid down in dependent claims.

In the following the present invention is explained in greater detail with respect to several embodiments thereof in conjunction with the accompanying drawings, wherein:
Fig. 1 is a partial enlarged view of a first embodiment taken from Fig. 2, illustrating the function thereof;
Fig. 2 is a general sectional front view of the first embodiment;
Fig. 3 is a partial enlarged sectional view of the first embodiment taken from Fig. 2;
Fig. 4 is a partial enlarged sectional view of the first embodiment taken from Fig. 3, illustrating the function thereof;
Fig. 5 is a partial perspective view of the bearing in the connecting portion between the crankshaft and the large end of the connecting rod of the first embodiment;
Fig. 6 is a view of a second embodiment, corresponding to Fig. 1;
Fig. 7 is a view of a third embodiment, corresponding to Fig. 1;
Fig. 8 is a general sectional side view of a fourth embodiment;
Fig. 9 is a sectional view of the fourth embodiment taken along line 9-9 of Fig. 8;
Fig. 10 is a view of a fifth embodiment, corresponding to Fig. 9;
Fig. 11a is a view similar to that of figure 1 whereby the pin fitting holes and the connecting portion or small end baring respectively is lubricatable via slots; and
Fig. 11b is a sectional view of the embodiment according to figure 11a.

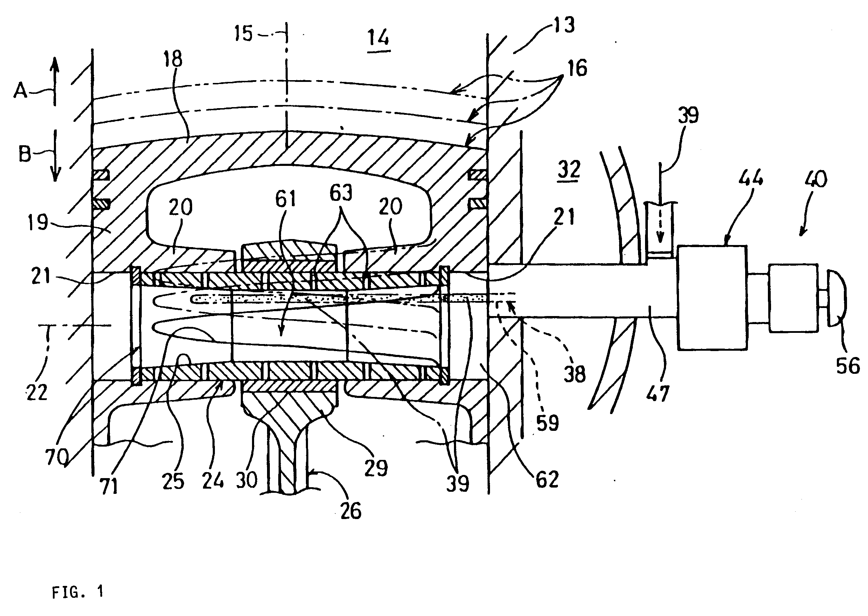

Figs. 1-4 are views showing a first embodiment.

Numeral 1 in the figures designates an internal combustion engine, or preliminarily compressed type two-stroke engine, used for a watercraft, automobile, motorcycle, or the like.

The engine 1 has a crankcase 2. The inside space of the crankcase 2 constitutes a crank chamber 3, in which is provided a crankshaft 5 with its axial center 4 extending generally horizontally. The crankshaft 5 is supported on the crankcase 2 by a pair of bearings 7, 8 for rotation about the axial center 4.

The crankshaft 5 is comprised of a crank main shaft 9 located on the axial center 4, a crank arm 10 formed integral with the crank main shaft 9, and a crank pin 11 offset from the axial center 4 and formed integral with the crank arm 10.

Upwardly from the crankcase 2 is mounted a cylinder 13. Inside the cylinder 13 is formed a cylinder bore 14, and on an axial center 15 of the cylinder bore 14 is inserted a piston 16 to the cylinder bore 14 for sliding movement in the axial direction. The piston 16 is provided with a head 18 of a disklike shape located on the axial center 15, skirt 19 extending integrally from the head 18 toward the crankcase 2, and a pair of bosses 20 formed integrally on the inside circumferential surface of the skirt 19. These bosses 20 have pin fitting holes 21 therethrough, and these pin fitting holes 21 are located on an axial center 22, which is perpendicular to the axial center 15 of the cylinder bore 14.

On the axial center 22 is provided a piston pin 24 fitted to the piston 16 with both ends inserted to the pin fitting holes 21. The piston pin 24 is of a cylindrical shape and has an inside hole 25 therethrough.

One end (bottom end) of the cylinder bore 14 is in communication with the crank chamber 3, and a connecting rod 26 extends from the crank chamber 3 to the cylinder bore 14. One end of the connecting rod 26, or a large end 27, is connected to the crank pin 11 of the crankshaft 5 through a large end bearing 28, and the other end of the connecting rod 26, or a small end 29, is connected to the piston pin 24 through a small end bearing 30.

The other end (top end) of the cylinder bore 14 constitites a closed space defined by the piston 16, which space serves as a combustion chamber 31. The cylinder 13 is formed with a scavenging port 32 for providing communication between the crank chamber 3 and the combustion chamber 31. An ignition plug 33 is attached to the cylinder 13 with its spark section facing the combustion chamber 31. An electrical control device 34 for the engine 1 is provided, and the ignition plug 33 is electrically connected to the control device 34.

When the engine 1 is operated to rotate the crankshaft 5 in one direction, the piston 16 moves in association with the crankshaft 5 through the connecting rod 26, with repeated forward (arrow A in Fig. 1) and backward (arrow B in Fig. 1) movements in the cylinder bore 14.

When the piston 16 moves forward (A), the vacuum generated in the crank chamber 3 causes intake air to be taken into the crank chamber 3 from the outside, and then, when the piston moves backward (B), the intake air in the crank chamber 3 is compressed preliminarily. The compressed intake air is then supplied to the combustion chamber 31 through the scavenging port 32. Fuel is also supplied to the combustion chamber 31.

When the piston moves forward (A) again, mixture of the intake air and fuel in the combustion chamber 31 is compressed, and then the sparks of the ignition plug 33 triggered through the control of the control device 34 sets the mixture burning, which forces the piston 16 to move backward (B) toward the crankcase 2. At this time, as described above, the intake air which has been preliminarily compressed in the crank chamber 3 is supplied to the combustion chamber 31 through the scavenging port 32 to scavenge the combustion chamber 31, and the burnt gas in the combustion chamber 31 is discharged as exhaust gas to the outside through the exhaust pipe.

Thus, the repetition of the above-described action causes the crankshaft to rotate in one direction so that power will be output by the crankshaft 5.

A lubrication device 37 is provided for lubricating engine 1 sections.

The lubrication device 37 includes a cylinder side oil passage 38 provided on the cylinder side and having at one end an opening to the cylinder bore 14, and an oil supply means 40 for supplying pressurized lubricating oil 39 to this cylinder side oil passage 38. The oil supply means 40 comprises an oil tank 42 for storing lubrication oil 39, an oil pump 43 for pumping the oil from the oil tank 42, an oil pressurizing means 44 for pressurizing the lubricating oil 39 from the oil pump 43 to supply the pressurized oil to the cylinder side oil passage 38, and a regulator 45 for maintaining the pressure of the lubricating oil 39 supplied to the oil pressurizing means 44 by the oil pump 43 at a predetermined value.

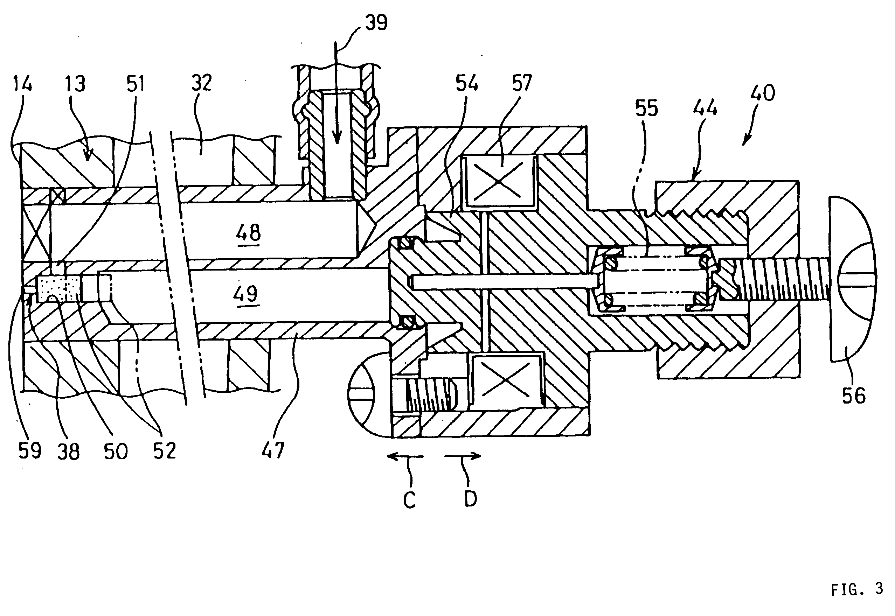

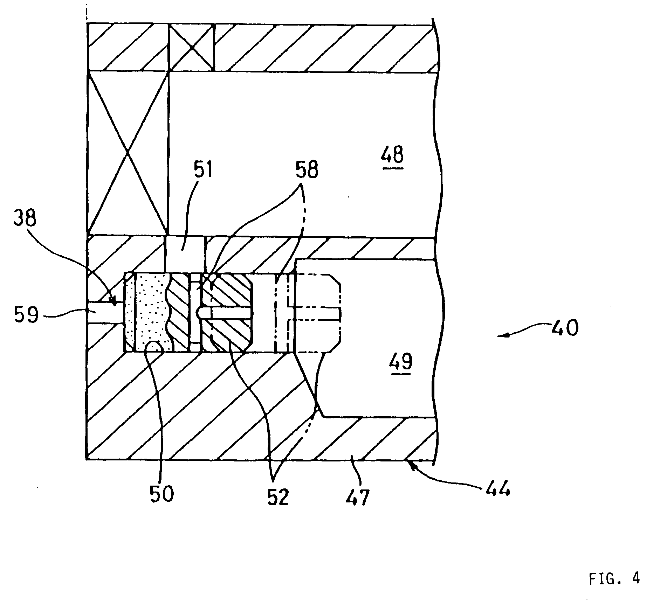

Referring to Figs. 3, 4, the oil pressurizing means 44 comprises a case 47 mounted to the cylinder 13, a low pressure chamber 48 and working oil chamber 49 formed in the case 47, a pressurized oil chamber 50 formed in the case 47 for communication with the cylinder hole side end of the working oil chamber 49, a case communication passage 51 for providing communication between the pressurized oil chamber 50 and the low pressure oil chamber 48, a valve member 52 insertable to the pressurized oil chamber 50 for sliding movement, an armature 54 supported on the case 47 and movable in the forward (arrow C in Fig. 3) and backward (arrow D in Fig. 3) direction with respect to the working oil chamber 49, and a spring 55 for urging the armature 54 to move forward (C), an adjusting handle 56 for adjusting the stiffness of the spring 55, and a solenoid 57 supported on the case 47 and provided corresponding to the armature 54.

The low pressure chamber 48 is in communication with a delivery port of the oil pump 43, and filled with lubricating oil 39 from the oil pump 43 at all times. The cylinder side oil passage 38 is formed in the case 47, and an opening 59 at one end of the cylinder side oil passage 38 is open to the inside of the cylinder bore 14 from the inside circumferential surface thereof, with the axial center generally parallel to that 22 of the piston pin 24. The other end of the cylinder side oil passage 38 is in communication with the pressurized oil chamber 50. The valve member 52 is formed with a valve member communication passage 58.

The solenoid 57 is electrically connected to the control device 34. When the solenoid 58 is deenergized through the control of the control device 34, the spring 55 forces the armature 54 to move forward (C) as shown in solid line in Figs. 3, 4, and the lubricating oil 39 in the working oil chamber 49 pressurized by the armature 54 pushes the valve member 52, which cuts off the communication between the case communication passage 51 and the cylinder side oil passage 38 as shown in solid line in Figs. 3, 4. At this time, the valve member communication passage 58 provides the communication between the low pressure oil chamber 48 and case communication passage 51 and the working oil chamber 49 so that the working oil chamber 49 is filled with the lubricating oil 39 supplied from the oil pump 43 through the low pressure oil chamber 48 and the case communication passage 51.

When the the solenoid 57 is energized through the control of the control device 34, the armature 54 is forced to move backward (D) by the magnetic force of the solenoid 57 against the spring 55. The vacuum of the working oil chamber 49 generated by the backward movement of the armature 54 causes the valve member 52 to be drawn toward the armature 54 and slide so as to increase the volume of the pressurized oil chamber 50, as shown in phantom line in Figs. 3, 4.

Thus, the case communication passage 51 allows the communication between low pressure oil chamber 48 and the pressurized oil chamber 50, and the positive pressure in the pressurized oil chamber 50 causes the lubricating oil 39 in the low pressure oil chamber 48 to be supplied to the pressurized oil chamber 50 through the case communication passage 51, so that the pressurized oil chamber 50 is filled with the lubricating oil 39. At this time, the valve member communication passage 58 is closed by the inside circumferential surface of the pressurized oil chamber 50.

Then, when the solenoid 57 is deenergized again, the magnetic force of the solenoid 57 is removed, and the spring 55 forces the armature 54 to move forward (C) quickly, as described above and shown in solid line in Figs. 3, 4, while the valve member 52 enters into the pressurized oil chamber 50 quickly to reduce the volume of the pressurized oil chamber 50, so that the communication between the case communication passage 51 and the cylinder side oil passage 38 is cut off immediately.

Then, associating with the backward movement (D) of the valve member 52, the lubricating oil 39 in the pressurized oil chamber 50 is pressurized and injected forcefully, parallel with the axial center 22 of the piston pin 24, into the cylinder bore 14 through the opening 59 at one end of the cylinder side oil passage 38. In this case, the lubricating oil 39 supplied to the cylinder bore 14 assumes substantially a laminar flow in the form of a straight bar.

That is, when the solenoid 57 is energized and deenergized, the lubricating oil 39 in the pressurized oil chamber 50 is adapted to be pressurized and supplied jettingly into the cylinder bore 14.

In Fig. 1, the piston pin 24 is formed with a piston side oil passage 61. One end of the piston side oil passage 61 constitutes the inside hole 25, and an opening 62 at one end of the piston side oil passage 61, or one end of the inside hole 25, is open to the inside circumferential surface of the cylinder bore 14. The piston pin 24 has a plurality of through holes formed therethrough radially. These through holes constitutes an opening 63 at the other end of the piston side oil passage 61, through which the inside hole 25 is open to the connecting portion between the piston pin 24 and the small end 29 of the connecting rod 26, or the small end bearing 30, and the fitting portion of the piston pin 24 to the inside circumferential surface of the pin fitting hole 21.

In the middle of the reciprocal sliding movement of the piston 16, the opening 59 at one end of the cylinder side oil passage 38 coincides with the opening 62 at one end of the piston side oil passage 61.

On one end of the crankshaft 5 is mounted a rotor 66 of a flywheel magneto 65. The rotation of the rotor 66 in association with the crankshaft 5 causes the flywheel magneto 65 to generate electricity and thus the flywheel magneto 65 is electrically connected to the control device 34 for power supply. A first sensor 67 for detecting the crank angle of the crankshaft 5 and a second sensor 68 for detecting the reference crank angle, as well as a throttle valve opening sensor (not shown), are provided and connected also to the control device 34.

Through the control of the control device 34, the engine speed is calculated based on the information from the first sensor 67 or the second sensor 68, and the solenoid 57 is energized in the timing at a first predetermined crank angle from the reference crank angle detected by the second sensor 68. The solenoid 57 is deenergized in the timing at the second predetermined crank angle. Values of these timing are each given as the time when the crank angle detected by the first sensor 67 and the crank angle from the reference crank angle calculated from the engine speed information are in agreement with the first and second predetermined crank angles stored in control device 34, respectively.

In Fig. 1, when the opening 59 at one end of the cylinder side oil passage 38 coincides with the upper part of the opening 62 at one end of the piston side oil passage 61 in the middle of the forward movement (A) of the piston 16, the solenoid 57 is controlled by the control device 34 so as to be deenergized. At this time, as described above, the lubricating oil 39 in the pressurized oil chamber 50 is pushed by the valve member 52 and supplied to the opening 62 at the piston side oil passage 61 through the opening 59 at one end of the cylinder side oil passage 38 (solid line in Fig. 1).

The armature 54 continues pushing the lubricating oil 39 in pressurized oil chamber 50 through the lubricating oil 39 in the working oil chamber 49 and valve member 52 against the resistance of the lubricating oil 39 passing through the cylinder side oil passage 38. Thus, the piston 16 is moved further forward, and even when the opening 59 at one end of the cylinder side oil passage 38 coincides with the vertical middle portion of the opening 62 at one end of the piston side oil passage 61, the lubricating oil 39 is supplied continuously to the opening 62 at one end of the piston side oil passage 61 through the opening 59 at one end of the cylinder side oil passage 38 (single dot and dash line in Fig. 1).

When the valve member 52 comes in abutment on the case 47 during the continued pushing operation of the spring 55 against the lubricating oil 39 in the pressurized oil chamber 50, the supply of the lubricating oil 39 to the opening 62 is stopped (double dot and dash line in Fig. 1). In other words, the stiffness of the spring 55 is set in such a manner that even when the engine speed is high, the supply of the lubricating oil 39 is completed within the period of time the opening 59 at one end of the cylinder side oil passage 38 is at least partly coincident with the opening 62 at one end of the piston side oil passage 61 during the forward movement of the piston 16.

The lubricating oil 39 supplied into the piston side oil passage 61 through the opening 62 at one end of the piston side oil passage 61, is supplied for lubrication to the small end bearing 30 or the fitting portion of the piston pin 24 to the inside circumferential surface of the pin fitting hole 21.

According to the arrangement described above, the lubricating oil 39 is supplied to the opening 62 at one end of the piston side oil passage 61 only when the opening 59 at one end of the cylinder side oil passage 38 coincides with the opening 62 at one end of the piston side oil passage 61. As a result, unnecessary lubricating oil supply to the cylinder bore 14 from the opening 59 at one end of the cylinder side oil passage 38 is prevented.

In the case described above, the opening 59 at one end or the cylinder side oil passage 38 is disposed within the locus of the pin fitting hole 21 reciprocating, together with piston 16, along the inside circumferencial surface of the cylinder bore 14. Therefore, even if the lubricating oil 39 is continuously supplied to the cylinder bore 14 through the opening 59 at one end of the cylinder side oil passage 38 by the oil supply means 40, the opening 59 at one end of the cylinder side oil passage 38 is closed by the piston 16 and piston pin 24 when the opening 59 at on end of the cylinder side oil passage 38 does not coincide with the opening 62 at one end of the piston side oil passage 61 during the sliding movement of the piston 16, so that unnecessary lubricating oil supply to the cylinder bore 14 be prevented.

Alternative manner for spraying oil may be adopted in which a little oil is supplied for the lubrication between the piston 16 and the cylinder bore 14, even when the opening 59 at one end does not coincide with the opening 62 at one end. In this case, no separate oil passage is needed for the lubrication of the sliding portion of the piston 16, which simplifies the construction.

In the previous arrangement, the opening 59 at one end of the cylinder side passage 38 is positioned at the pin fitting hole 21 when the piston 16 comes close to the bottom dead center or the top dead center.

That is, when the piston 16 is located near the bottom dead center, it changes its direction from one of forward and backward sliding movements or the forward movement (A) to the other one or the backward movement (D), sliding speed of which is comparatively low.

Therefore, as described above, if the opening 59 at one end of the cylinder side oil passage 38 coincides with the opening 62 at one end of the piston side oil passage 61 when the piston 16 is located near the bottom dead center, lubricating oil 39 is supplied adequately from the opening 59 at one end of the cylinder side oil passage 38 to the opening 62 at one end of the piston side oil passage 61 because of the low sliding speed of the piston 16.

Lubricating oil 39 may be supplied to the opening 62 either when the piston 16 moves forward (A) or backward (B), or both. Or, according to the throttle opening or engine load, the number of revolution of the crankshaft 5 per one supply of lubricating oil, may be made smaller (for example, 0.5, 1, or 2) for heavier engine load, and larger (for example, 3, 5, or 10) for lighter engine load. The timing that the solenoid 57 is energized, is set at the time when overlapping of the opening 59 and the opening 62 is completed during the backward movement (D) of the piston 16.

In the inside hole 25 of the piston pin 24 in the piston side oil passage 61, near the opening 62, is provided a porous oil holder 70 capable of holding oil. The oil holder 70 is made of sintered metal or the like, which is inserted in the inside hole 25 and of a columnar shape. The oil holder 70 is formed, on its axial center 22, with a hole 71 with a bottom, one end of the hole 71 is open to the opening 62 at one end of the piston side oil passage 61, and the Inside diameter of the hole 71 is decreased toward the other end of the hole 71.

As a result of the oil holder 70 being provided as described above, when lubricating oil 39 is supplied from the opening 59 at one end of the cylinder side oil passage 38 to the opening 62 at one end of the piston side oil passage 61, the lubricating oil 39 is drawn into the oil holder 70 immediately and held there by capillary phenomena, and then supplied from the oil holder 70 through the opening 63 at the other end of the piston side oil passage 61 to the small end bearing 30 and the fitting portion of the piston pin 24 to the inside circumferential surface of the pin fitting hole 21 .

Therefore, when lubricating oil 39 is supplied from the opening 59 at one end of the cylinder side oil passage 38 to the opening 62 at one end of the piston side oil passage 61, the lubricating oil 39 strikes against the inside surface of the opening 62 at one end of the piston side oil passage 61 and bounces back, so that inadequate supply of lubricating oil 39 to the small end bearing 30 is prevented.

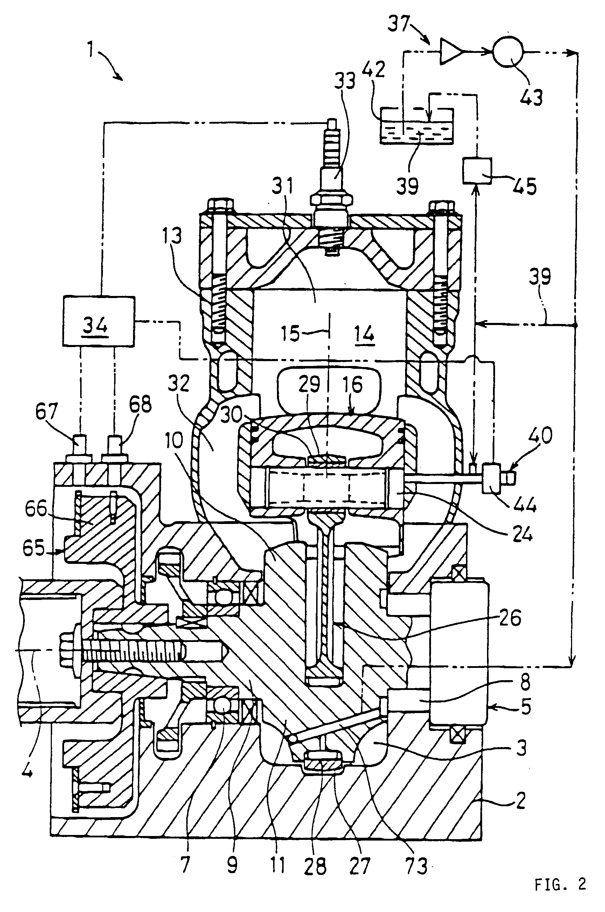

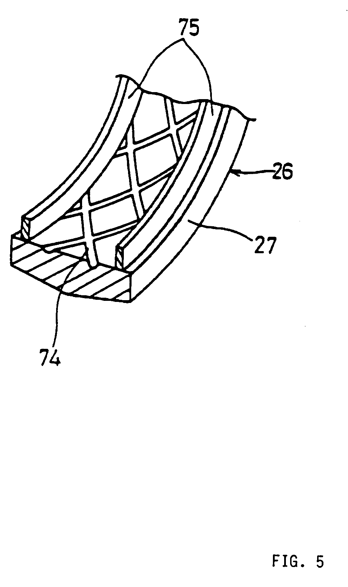

In Fig. 2, 5, the crankshaft 5 is formed with a crankshaft side oil passage 73 in communication with the connecting portion between the crank pin 11 and the large end 27 of the connecting rod 26, or the large end bearing 28. Lubricating oil 39 is supplied to the crankshaft side oil passage 73 by the oil pump 43 of the oil supply means.

Between the outside circumferential surface of the crank pin 11 of the crankshaft 5 and the inside circumferential surface of the large end 27 of the connecting rod 26 facing the outside circumferential surface is interposed the large end bearing 28, and a plurality of oil grooves 74 are formed in the inside circumferential surface of the large end 27. A pair of sealing members 75 are provided in such a manner as to sandwich the large end bearing 28, in contact with the inside circumferential surface of the large end 27, in the axial direction of the crankshaft 5. An adequate amount of lubricating oil 39 is adapted to be held around the large end bearing 28 surrounded by both seal members 75, thereby effecting more reliable lubrication of the large end bearing 28.

Since no lubrication by splashing is needed for small end bearing 30 and the like, the amount of lubricating oil 39 supplied to the large end hearing 28 can be reduced as much. Further, splashed and lost oil can be reduced by the sealing members 75 so that the lubricating oil supply can be reduced all the more.

Other drawings are views showing a second through a fifth embodiment. These embodiments are similar to the first one in many respects for their construction as well as functions, and thus like parts are designated by like reference numerals and further description is omitted.

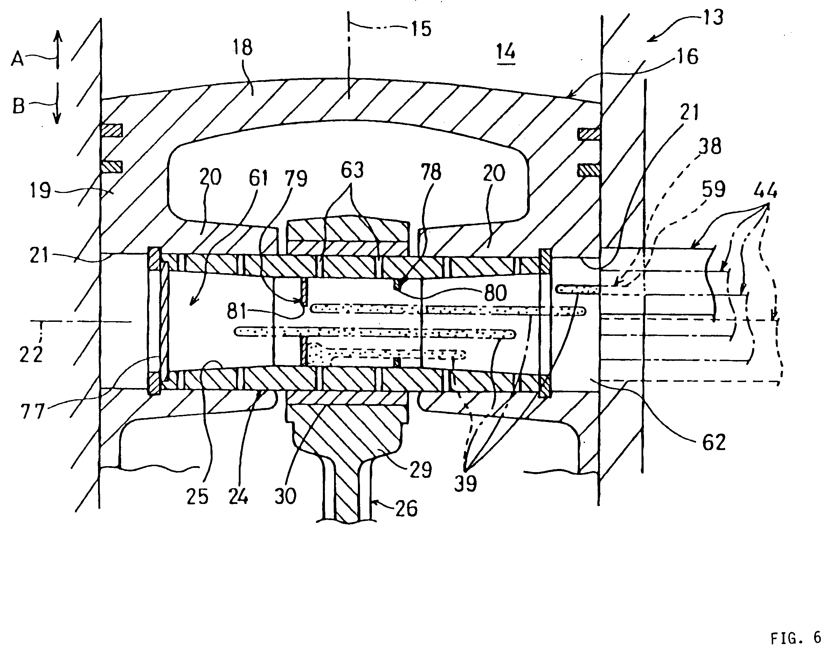

Fig. 6 is a view of a second embodiment, showing the cylinder 13 moving relative to the piston 16 for brevity.

According to the second embodiment, the opening of the inside hole 25 of the piston pin 24, on the side opposite to the opening 62 at one end of the piston side oil passage 61, is covered by a cover plate 7. The axial middle section of the inside hole 25 is partitioned by a plurality of (two) partition plates 78, 79 of a disklike shape. On the axial center 22 of these plates 78, 79 are formed circular through holes 80, 81, respectively, the inside diameter of which is increased toward the opening 62 at one end of the piston side oil passage 61.

Through the control of the control device 34, when the upper part of the opening 62 at one end of the piston side oil passage 61 has reached the opening 59 at one end of the cylinder side oil passage 38 just before the piston 16 comes to the bottom dead center during its backward movement (B), lubricating oil 39 is supplied jettingly to the opening 62 at one end of the piston side oil passage 61 from the opening 59 at one end of the cylinder side oil passage 38 (solid line in Fig. 6).

Then, during the time the piston 16 moves forward (A) in the vicinity of the bottom dead center after reaching there, lubricating oil 39 is supplied continuously. At this time, the lubricating oil 39 supplied into the inside hole 25 of the piston 24 passes through the opening 62 at one end of the piston side oil passage 61 and the through hole 80 of the partition plate 78 on the opening 62 side, and approaches the upper edge of the through hole 81 of the partition plate 79 on the cover plate 77 side, when the lubricating oil 39 supplied from the opening 59 at one end of the cylinder side oil passage 38 is stopped (single dot and dash line in Fig. 6).

When the piston 16 moves further forward (A), the lower edge of the through hole 81 of the partition plate 79 on the cover plate 77 side, starts blocking lubricating oil flow of a rodlike shape moving in the space in the inside hole 25 of the piston pin 24, at the longitudinal middle portion (double dot and dash line in Fig. 6).

When the piston 16 moves further forward (A), the lower edge of the through hole 80 of the partition plate 78 on the opening 62 side at one end of the piston side oil passage 61, starts blocking lubricating oil flow of a rodlike shape moving in the space in the inside hole 25 of the piston pin 24, at the longitudinal middle portion (dash line in Fig. 6).

As described above, the rod like lubricating oil flow is divided into three parts in the longitudinal direction, which are distributed to the three spaces in the inside hole 25 of the piston pin 24, partitioned by the partition plates 78, 79, respectively. Therefore, lubricating oil 39 is supplied substantially uniformly to the holes of the opening 63, thus providing uniform lubrication of the related parts.

According to the second embodiment, lubricating oil 39 is injected into the opening 62 at one end of the piston side oil passage 61 from the opening 59 at one end of the cylinder side oil passage 38 when the piston 16 approaches the bottom dead center during backward movement (D), so that adequate amount of lubricating oil 39 is supplied while the piston moves backward (B) and begins to move forward (A) through the bottom dead center. Therefore, adequate lubrication is achieved even in the high speed revolution of the engine.

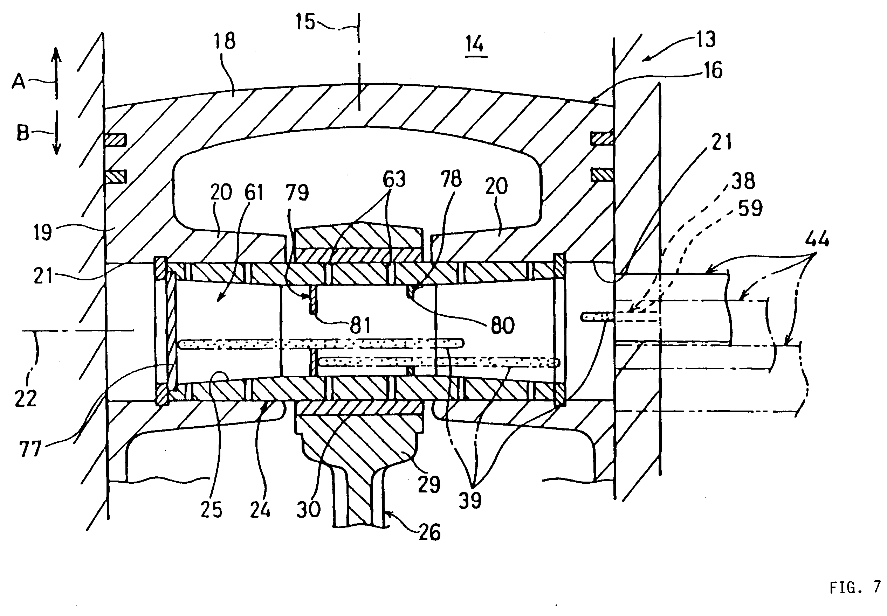

Fig. 7 is a view of a third embodiment, showing the cylinder 13 moving relative to the piston 16 for brevity.

According to the third embodiment, similar to the foregoing second embodiment, the cover plate 77 and the partition plates 78, 79 are provided, and these partition plates are formed with through holes 80, 81, respectively.

Through the control of the control device 34, when the piston is moving forward (A) just after leaving the bottom dead center, and the upper part of the opening 62 at one end of the piston side oil passage 61 has reached the opening 59 at one end of the cylinder side oil passage 38, lubricating oil 36 is supplied jettingly to the opening 62 at one end of the piston side oil passage 61 from the opening 59 at one end of the cylinder side oil passage 38 (solid line in Fig. 6).

When the piston 16 moves further forward (A), the lower edge of the through hole 81 of the partition plate 79 on the cover plate 77 side, starts blocking lubricating oil flow of a rodlike shape moving in the space in the inside hole 25 of the piston pin 24, at the longitudinal middle portion (single dot and dash line in Fig. 7).

When the piston 16 moves further forward (A), the lower edge of the through hole 80 of the partition plate 78 on the opening 62 side at one end of the piston side oil passage 61, starts blocking lubricating oil flow of a rodlike shape moving in the space in the inside hole 25 of the piston pin 24, at the longitudinal middle portion (double dot and dash line in Fig. 7).

As for other construction and functions, this embodiment is the same as the foregoing second one.

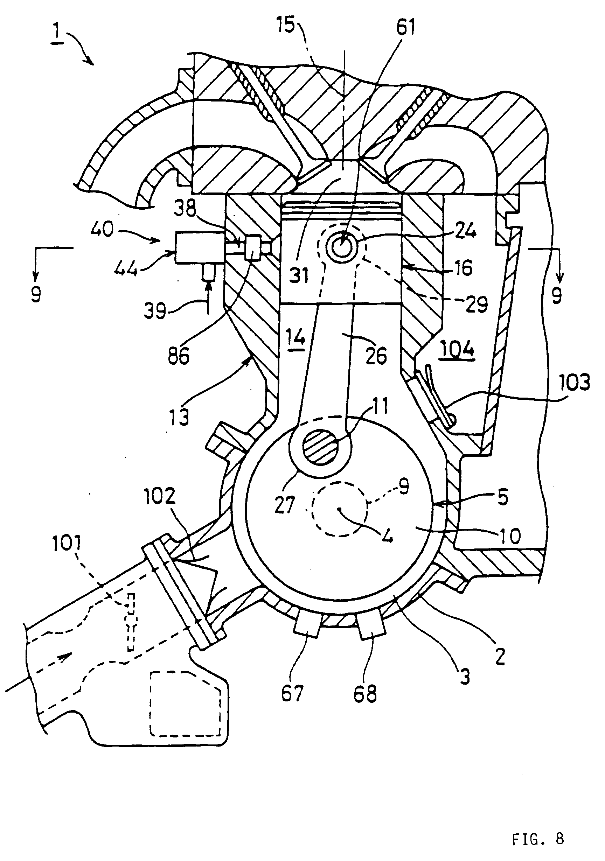

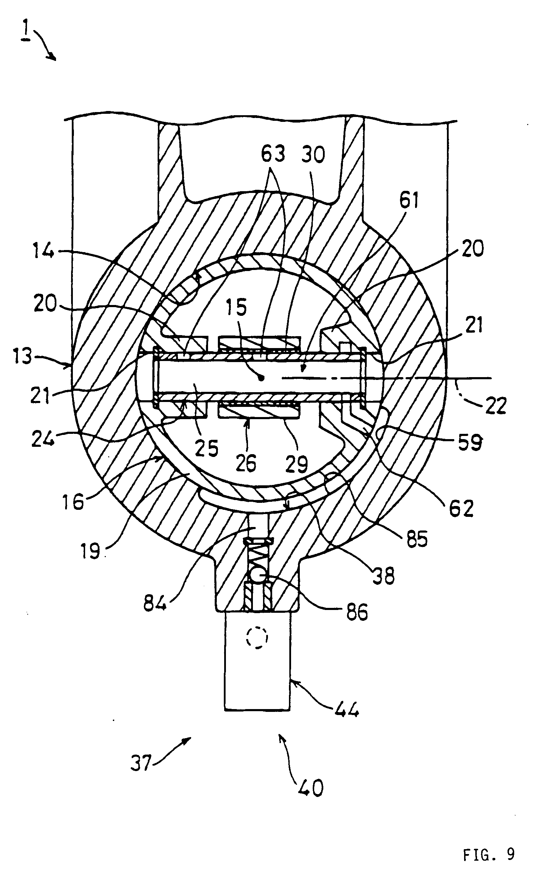

Figs. 8, 9 are views showing a fourth embodiment. In Fig. 9, the scavenging port 32 is omitted.

In the figure, numeral 101 designates a throttle valve 102, numeral 103 a reed valve type check valve, and numeral 104 an accumulator. Fresh air is drawn into the crank chamber 3 and sent to the accumulator 104 for every revolution of the crankshaft 5, and supplied to the combustion chamber 31 from the accumulator 104 for every two revolutions for detonation.

In this embodiment, the engine 1 is a crank chamber turbo type four-stroke engine, and lubricating oil 39 in the crank chamber 3 flows into the combustion chamber 31 so that similar to the foregoing embodiments for two-stroke engines, a small amount of lubricating oil 39 is supplied to the small end 29, large end 27, and the sliding portion of the piston 16.

The cylinder side oil passage 38 is provided with an oil passage hole 84 passing through the wall of the cylinder 13 in the radial direction, and an oil passage groove 85 formed in the inside circumferential surface of the cylinder bore 14 of the cylinder 13. The oil passage groove 85 extends in the circumferential direction of the cylinder bore 14, the oil passage hole 84 has an opening at one end of the oil passage groove 85, and the other end of the oil passage groove 85 constitutes the opening 59 at one end of the cylinder side oil passage 38.

The piston side oil passage 61 formed in the piston 16 and the piston pin 24, is open, at one end, to the inside circumferential surface of the cylinder bore 14, and at the other end, to the connecting portion between the piston pin 24 and the small end 29, or the small bearing 30. The opening 62 at one end of the piston side oil passage 61 is formed in the boss 20 of the piston 16. The oil pressurizing means 44 of the oil supply means 40 supplies lubricating oil 39 to the oil passage hole 84.

The oil passage groove 85 is provided within the stroke of the piston 16 in the inside circumferential surface of the cylinder bore 14. In the oil passage hole 84 is provided an one-way valve 86 for allowing lubricating oil 39 to flow only in the direction of the oil passage groove 85, thus preventing reverse flow of the lubricating oil 39 from the cylinder side oil passage 38 to the oil pressurizing means 44.

According to this embodiment, lubricating oil 39 supplied from the pressurizing means 44 lubricates the sliding portion between the inside circumferential surface of the cylinder bore 14 and the piston 16. The oil passage groove 85 extends in the circumferential direction of the cylinder 14 so that the degree of freedom is improved in locating the oil pressurizing means 44 for supplying lubricating oil 39 to the oil passage groove 85.

Even if the oil passage groove 85 is exposed to the combustion chamber 31 in the cylinder bore 14 when the piston 16 approaches the bottom dead center, the one-way valve 86 prevents the burnt gas pressure in the combustion chamber 31 from affecting the oil pressurizing means 44. Therefore, as a result of the one-way valve 86 being provided, it is not necessary to provide the oil passage groove 85 within the stroke of the piston 16 in the inside circumference of the cylinder bore 14.

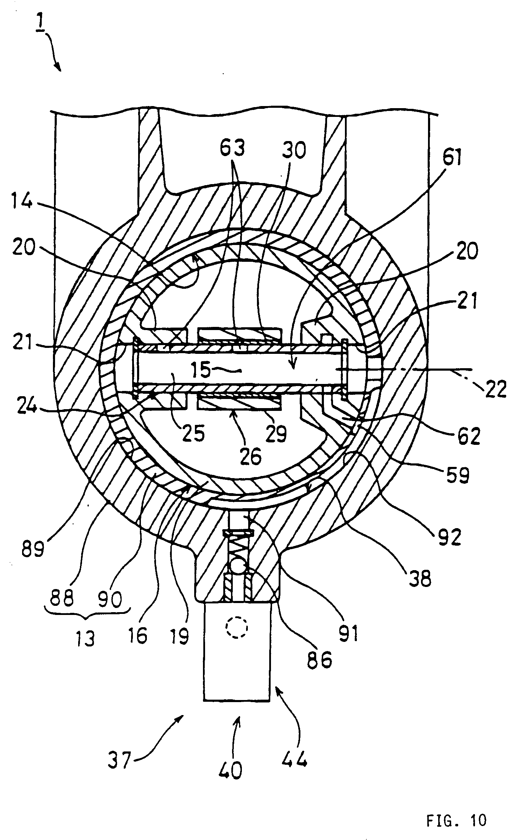

Fig. 10 is a view showing a fifth embodiment.

According to the fifth embodiment, the cylinder 13 comprises a cylinder body 88, a circular bore 89 formed in the cylinder body 88 on the axial center 15, and sleeve 90 fitted fixedly in the circular bore 89. The inside hole of the sleeve 90 constitutes the cylinder bore 14.

The cylinder side oil passage 38 is provided with a first oil passage hole 91 passing through the wall of the cylinder body 88 in the radial direction, a second oil passage hole 92 formed in the fitting surface of the sleeve 90 to the cylinder body 89, and a third oil passage hole passing through the sleeve 90 in the radial direction. The second oil passage hole 92 extends in the circumferential direction of the cylinder bore 14; the first oil passage hole 91 is open to one end of the second oil passage hole 92; the third oil passage hole is open to the other end of the second oil passage hole 92; and the third oil passage hole constitutes the opening 59 at one end of the cylinder side oil passage 38.

As for other construction and functions, this embodiment is the same as the foregoing fourth one.

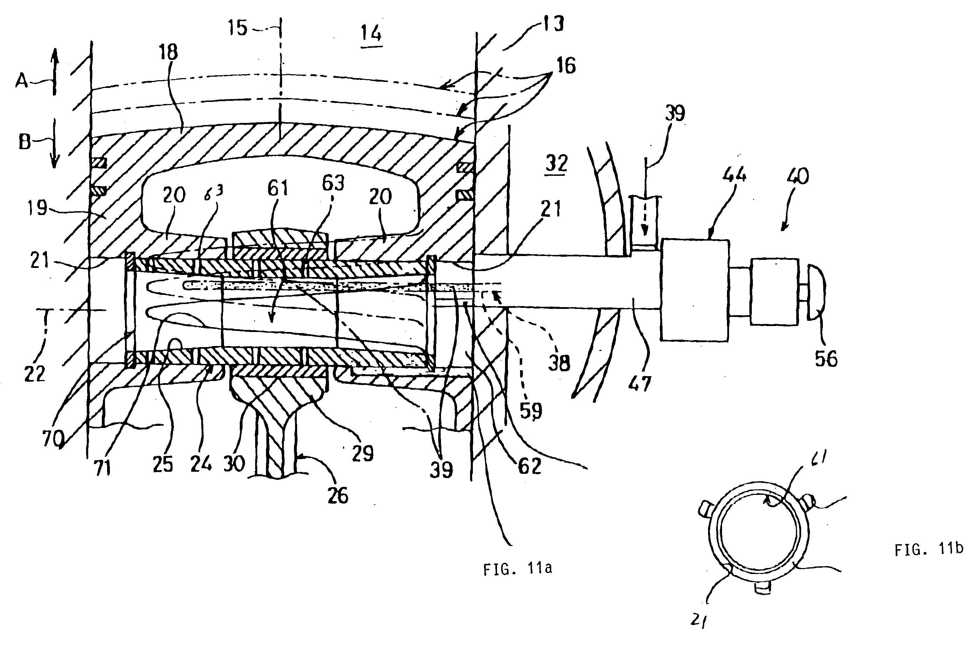

Figure 11a shows a further embodiment of the present invention being similar to that of figure 1 except for the configuration to lubricate the pin fitting hole 21 and/or the small end bearing 30. Instead of the through holes or openings or in addition to same there is provided at least one slot 93a within the pin fitting hole 21 being coaxially aligned to the piston side oil passage 61.

In order to enhance further the lubrication it is advantageous to provide at least three slots 93a through 93c equal angularly disposed in the pin fitting hole 21 which is schematically shown in figure 11b.

Although the present invention is described with respect to the embodiments shown in the figures 1 through 11a, 11b it is also possible to have various combinations of these embodiments or features if the respective realisation of combined figures is not being mutually exclusive.

The effects of this invention are described below.

According to an embodiment of the invention, a lubrication structure for engines including a cylinder mounted on a crankcase supporting a crankshaft, a piston inserted in a cylinder bore of said cylinder for sliding movement in the axial direction, a piston pin fitted to said piston, and a connecting rod having a large end connected to said crankshaft and a small end to said piston pin, fresh air being supplied to a combustion chamber in said cylinder bore through said crankcase, while including a cylinder side oil passage provided on the cylinder side and having at one end an opening to said cylinder bore, and an oil supply means for supplying pressurized lubricating oil to said cylinder side oil passage, whereby said opening at one end of said cylinder side oil passage is open to the inside of said cylinder bore from the inside circumferential surface thereof, in said piston and/or said piston pin is provided a piston side oil passage having at one end an opening to the inside circumferential surface of said cylinder bore and at the other end an opening to the connecting portion between said piston pin and the small end of said connecting rod, and in the middle of the sliding movement of said piston, said opening at one end of said cylinder side oil passage coincides with said opening at one end of said piston side oil passage.

Therefore, when the opening at one end of the cylinder side oil passage coincides with the opening at one end of the piston side oil passage in the middle of the sliding movement of the piston during engine running, lubricating oil supplied to the cylinder side oil passage from the oil supply means is supplied to the piston side oil passage through the cylinder side oil passage and to the connecting portion between the piston pin and the small end of the connecting rod through the opening at the other end of the piston side oil passage for lubrication.

In this case, when the opening at one end of the cylinder side oil passage does not coincide with the opening at one end of the piston side oil passage in the middle of the sliding movement of the piston, the opening at one end of the cylinder side oil passage is closed by the piston and/or piston pin so that unnecessary lubricating oil supply to the cylinder bore is restricted.

Therefore, lubrication of the connecting portion between the piston pin and the small end of the connecting rod is performed with a small amount of lubricating oil without waste, and the amount of lubricating oil entering into the combustion chamber can be kept small for that. As a result, white smoke from the engine is prevented and discharge of unburnt lubricating oil is restricted so that unnecessary consumption of lubricating oil can be reduced.

According to another embodiment of the invention, an opening at one end of a cylinder side oil passage coincides with an opening at one end of a piston side oil passage when the piston is located near the top and/or the bottom dead center. This characteristic provides the following advantage.

That is, when the piston comes near its top or bottom dead center, it changes its direction from either one of forward and backward sliding movements to the other one, sliding speed of which is comparatively low.

Therefore, as described above, if the opening at one end of the cylinder side oil passage coincides with the opening at one end of the piston side oil passage when the piston is located near the top and/or the bottom dead center, both openings coincide with each other for a long time because of the low sliding speed of the piston, and lubricating oil is supplied adequately from the opening at one end of the cylinder side oil passage to the opening at one end of the piston side oil passage.

As a result, lubrication of the connecting portion between the piston pin and the small end of the connecting rod can be performed more reliably, and the amount of lubricating oil consumption can be reduced as much.

According to a further embodiment of the invention, a porous oil holder capable of holding oil is provided in the vicinity of an opening at one end of a piston side oil passage.

As a result, when lubricating oil is supplied from the opening at one end of the cylinder side oil passage to the opening at one end of the piston side oil passage, the lubricating oil is drawn into the oil holder immediately and held there by capillary phenomena, and then supplied from the oil holder through the opening at the other end of the piston side oil passage to the connecting portion between the piston pin and the small end of the connecting rod.

Therefore, when lubricating oil is supplied from the opening at one end of the cylinder side oil passage to the opening at one end of the piston side oil passage, the lubricating oil strikes against the inside surface of the opening at one end of the piston side oil passage and bounces back so that inadequate supply of lubricating oil to the small end bearing is prevented and adequate lubrication can be achieved.

According to a still further embodiment of the invention, between the outside circumferential surface of a crankshaft and the inside circumferential surface of a large end of a connecting rod facing said outside circumferential surface of said crankshaft is interposed a large end bearing and in the inside circumferential surface of said large end are formed lubrication grooves, a pair of sealing members are provided so as to sandwich said large end bearing in the axial direction of said crankshaft, a crankshaft side oil passage is provided in communication with said large end bearing, and lubricating oil is supplied to said crankshaft side oil passage by oil supply means.

Therefore, once lubricating oil is supplied to the large end bearing in the connecting portion between the crankshaft and the large end of the connecting rod, lubricating oil is retained there for a long time, and lubricating oil supply can be reduced for that, as well as the amount of lubricating oil splashed over the large end bearing.

As a result, lubrication of the large end bearing can be performed more reliably, and the amount of lubricating oil consumption can be reduced as much.

## Claims

1. A lubrication arrangement for an internal combustion engine (1), said engine (1) comprising a crankcase (2) defining a crankchamber (3) and supporting a crankshaft (5), a cylinder (13) mounted on the crankcase (2), a piston (16) slidingly and reciprocatably received in a cylinder bore (14) of said cylinder (13), a connecting rod (26) for connecting said piston (16) with said crankshaft (5), said connecting rod (26) having a large end (27) connected to said crankshaft (5) via a crank pin (11) and a small end (29) connected to said piston (16) via a piston pin (24), and at least one cylinder side oil passage (38) of said lubrication arrangement having a first opening (59) to said cylinder bore (14) wherein the other end is connected to an oil supply means (43, 44) for supplying pressurized lubricating oil (39) to said cylinder side oil passage (38), **characterized in that** said piston (16) and/or said piston pin (24) being provided with a second opening (62) whereby upon reciprocating movement of said piston (16) said first and second openings (59, 62) coincide with each other at a certain position of said piston (16).

2. A lubrication arrangement according to claim 1, **characterized by** a piston side oil passage (61) within said piston (16) and/or piston pin (24) being connected to said second opening (62) as well as to at least one piston pin supporting part (21) of the piston (16) or a bearing (30) arranged at said small end (29) for supplying oil (39).

3. A lubrication arrangement according to claim 1 or 2, **characterized in that** said position of coincidence is near the top dead center and/or the bottom dead center and/or near the middle of the stroke of said piston (16).

4. A lubrication arrangement according to at least one of the preceding claims 1 to 3, **characterized in that** said first opening (59) at the end of said cylinder side oil passage (38) is open to the inside of said cylinder bore (14) from the inside circumferential surface thereof.

5. A lubrication arrangement according to at least one of the preceding claims 1 to 4, **characterized in that** between the outside circumferential surface of the crankshaft (5) and the inside circumferential surface of the large end (27) of a connecting rod (26) facing said outside circumferential surface of said crankshaft (5) is interposed a large end bearing (28) and in the inside circumferential surface of said large end (27) are formed lubrication grooves (74).

6. A lubrication arrangement according to claim 5, **characterized by** a pair of sealing members (75) are provided so as to sandwich said large end bearing (28) in the axial direction of said crankshaft (5), a crankshaft side oil passage (73) is provided in communication with said large end bearing (28), and lubricating oil is supplied to said crankshaft side oil passage (73) by said oil supply means.

7. A lubrication arrangement according to at least one of the preceding claims 1 to 6, **characterized in that** a porous oil holder (70) is provided in the vicinity of one opening of said piston side oil passage (61).

8. A lubrication arrangement according to at least one of the preceding claims 1 to 7, **characterized in that** said oil supply means comprising an oil pressurizing means (44) having a low pressure chamber (48) and working oil chamber (49), a pressurized oil chamber (50) for communication with the cylinder hole side end of the working oil chamber (49), a case communication passage (51) for providing communication between the pressurized oil chamber (50) and the low pressure oil chamber (48).

9. A lubrication arrangement according to claim 8, **characterized by** a valve member (52) insertable to the pressurized oil chamber (50) for sliding movement, an armature (54) supported on the case (47) and movable in the forward and backward direction with respect to the working oil chamber (49), and a spring (55) for urging the armature (54) to move forward, an adjusting handle (56) for adjusting the stiffness of the spring (55), and a solenoid (57) supported on the case (47) and provided corresponding to the armature (54).

10. A lubrication arrangement according to at least one of the preceding claims 7 to 9, **characterized in that** said oil holder (70) is provided with a hole (71) along its axial center (22), said hole (71) having a bottom and being open towards said second opening (62) whereby the inside diameter of said hole (71) decreasing towards the end of the hole (71) opposite to said second opening (62).

11. A lubrication arrangement structure according to at least one of the preceding claims 1 to 6, **characterized in that** the end of said piston side oil passage (61) is provided with a cover plate (77), the axial middle section of said piston side oil passage (61) is provided with a plurality of partition plates (78, 79) each having through holes (80, 81) the diameters of which are increasing towards said second opening (62).

12. A lubrication arrangement according to at least one of the preceding claims 1 to 11, **characterized in that** the cylinder side oil passage (38) is provided with an oil passage hole (84) passing through the wall of the cylinder (13) in the radial direction, and an oil passage groove (85) formed in the inside circumferential surface of the cylinder bore (14) of the cylinder (13), said oil passage groove (85) extending in the circumferential direction of the cylinder bore (14), the oil passage hole (84) has an opening at one end of the oil passage groove (85), and that the other end of the oil passage groove (85) constitutes the opening (59) at one end of the cylinder side oil passage (38).

13. A lubrication arrangement according to claim 12, **characterized in that** the oil passage groove (85) is provided within the stroke of the piston (16) in the inside circumferential surface of the cylinder bore (14), the oil passage hole (84) is provided a one-way valve (86) for allowing lubricating oil (39) to flow only in the direction of the oil passage groove (85).

14. A lubrication arrangement according to at least one of the preceding claims 1 to 11, **characterized in that** said cylinder (13) comprising a cylinder body (88) having a circular bore (89) and a sleeve (90) fixed to the circular bore (89), whereby the cylinder side oil passage (38) is provided with a first oil passage hole (91) passing through the wall of the cylinder body (88) in the radial direction.

15. A lubrication arrangement according to claim 14, **characterized by** a second oil passage hole (92) formed in the fitting surface of the sleeve (90) to the cylinder body (89), and a third oil passage hole passing through the sleeve (90) in the radial direction, said second oil passage hole (92) extending in the circumferential direction of the cylinder bore (14), said first oil passage hole (91) is open to one end of the second oil passage hold (92), said third oil passage hole is open to the other end of the second oil passage hole (92), and said third oil passage hole constitutes the opening (59) at one end of the cylinder side oil passage (38).

16. A lubrication arrangement according to at least one of the preceding claims 1 to 15, **characterized by** a control device (34) for controlling the lubricant oil supply according to the position of said piston (16) within said cylinder bore (14) and/or according to engine operating conditions detected.

17. A lubrication arrangement according to claim 16, **characterized in that** said control device (34) controls said lubricant oil supply according to a certain pattern.

18. A lubrication arrangement according to at least one of the preceding claims 2 to 17, **characterized in that** said connection of said piston side oil passage (61) to said at least one piston pin supporting part (21) comprising at least one slot (93a-c) or through holes (63) provided traverse to said piston side oil passage (61).

19. A lubrication arrangement according to at least one of the preceding claims 1 to 18, **characterized in that** said engine (1) is a crankcase compression type internal combustion engine.

20. Method for lubricating an internal combustion engine (1), said engine (1) comprising a crankcase (2) defining a crankchamber (3) and supporting a crankshaft (5), a cylinder (13) mounted on the crankcase (2), a piston (16) slidingly and reciprocatably received in a cylinder bore (14) of said cylinder (13), a connecting rod (26) for connecting said piston (16) with said crankshaft (5), said connecting rod (26) having a large end (27) connected to said crankshaft (5) via a crank pin (11) and a small end (29) connected to said piston (16) via a piston pin (24), and at least one cylinder side oil passage (38) of a lubricating arrangement having a first opening (59) to said cylinder bore (14) wherein the other end is connected to an oil supply means (43, 44) for supplying pressurized lubricating oil (39) to said cylinder side oil passage (38), **characterized in that** said piston pin (24) is directly lubricated via said first opening (59) when said piston pin (24) passes said first opening (59).

21. Method according to claim 20, **characterized in that** said piston pin (24) is directly lubricated when said piston (16) is at its top dead center and/or its bottom dead center and/or near the middle of its stroke.
